# EUROPEAN PATENT APPLICATION

(11) **EP 2 258 182 A1**
(43) Date of publication of application: **08.12.2010**
(21) Application number: 09713738.4
(22) Date of filing: 24.02.2009
(51) Int. Cl.: A01N 37/26, A01P 21/00

(54) **PLANT GROWTH PROMOTER ASSOCIATED WITH POTATO CYST NEMATODE**

(30) Priority: 28.02.2008 JP 2008047992
(71) Applicant: TOKAI UNIVERSITY EDUCATIONAL SYSTEM, Shibuya-ku Tokyo 151-0063 (JP)
(72) Inventor: FUKUZAWA, Akio, Sapporo-shi Hokkaido 005-8601 (JP); FUKUI, Keita, Sapporo-shi Hokkaido 005-8601 (JP); OKUMURA, Souhei, Sapporo-shi Hokkaido 005-8601 (JP)
(74) Representative: Matthews, Derek Peter
(86) International application number: PCT/JP2009/053280
(87) International publication number: WO 2009/107607

(57) **Abstract**

A growth promoter according to the present invention that can be applied to a plant other than solanaceous plants is a plant growth promoter utilizing potato cyst nematodes and contains a fatty acid dialkanolamide represented by the following general formula (1) as a substance that acts on the potato cyst nematodes:

R-CO-N(-R'-OH)(-R"-OH) (1)

(in the general formula (1), R represents an alkyl group that has 1 to 20 carbon atoms and may be substituted, and R' and R" may be the same or different from each other and each represent an alkylene group that has 1 to 10 carbon atoms and may be substituted). When the plant growth promoter of the present invention is sprayed on the soil where the eggs of potato cyst nematodes are present, potato cyst nematodes hatched by the effect of the above-described fatty acid dialkanolamide contained in the plant growth promoter promote the growth of a non-host plant.

## Description

### [Technical Field]

The present invention relates to a growth promoter that allows a beet or other plants to grow quickly to a large size through the effect of potato cyst nematodes in the soil, and the usage of the growth promoter.

### [Background Art]

Since potato cyst nematodes (hereinafter also referred to as "PCNs") entered Japan as a contaminant in foreign fertilizers and were found out for the first time in Hokkaido, which is a main potato-producing region, appearances of potato cyst nematodes have been confirmed one after another in various places in Japan, such as Nagasaki and Aomori. In fact the damage caused by the PCNs has become apparent with the decrease in the production of potatoes, and the same damage has also become prominent in various places around the world, such as European countries. Because potatoes are a staple food for many people in the world, the development of a method for suppressing the damage through the control of PCNs has been the subject of an important research task for those involved in the agricultural industry.

The eggs (second-generation larvae) maintained in cysts (dead bodies of female imagoes) remain dormant and survive for 20 years if they are not hatched. However, if host plants of PCNs are cultivated on that land, the second-generation larvae are hatched by the effect of a liquid secreted from the roots of the host plants, and thus the growth of the host plants is inhibited by the hatched nematodes. As a result of the rapid increase in nematode density, the nematodes spread across the land and therefore the damage to agricultural produce caused by the PCNs rapidly increases year by year. According to the conventional findings, since the eggs surviving in cysts are protected with hard shells, the eggs cannot be directly destroyed and the damage cannot be completely prevented by simply spraying a commonly used agricultural chemical over the soil. Even if the control of PCNs is achieved to some extent using a certain chemical agent, the level of damage returns to the previous level within several years because of the remaining eggs if complete control is not achieved (the eggs are completely destroyed). Since such a conventional method is completely useless for the control of PCNs, a novel chemical agent or method for preventing the damage caused by PCNs has not been developed yet at present.

Thus, the inventors of the present invention have focused on an ecological method. The ecological method is an indirect method in which the eggs of PCNs are forcedly hatched in some way, and then the hatched larvae are made to starve to death or destroyed using a typical agricultural chemical, which results in the prevention of the damage caused by the PCNs. It has been known for a long time that PCNs hatch when exposed to a substance secreted from the host plants, and there has been conducted a study for identifying a hatching-activating substance and isolating it from the secretory substance. Patent Document 1 discloses Solanoeclepin A.as the hatching-activating substance. However, according to the research conducted by the inventors of the present invention, it has been concluded that the substance has low polarity and poor solubility in water and therefore is not an activator in the soil.

Meanwhile, it has been confirmed that, when a tomato hydroponic solution is sprayed on the soil where PCNs are present, the eggs of the PCNs are hatched. However, even within Japan, the area of farmlands where PCNs appear is as vast as about 11,000 ha, and the amount of chemical solution that needs to be sprayed is as large as 18 liters per 1 m² Therefore, a control agent is not being put to practical use at present. To effectively promote the hatching of eggs of PCNs, it has been strongly desired to develop a common chemical agent that is easily available in a large amount at low cost instead of a special chemical agent.

It is generally known that, once cyst nematodes enter the roots of host plants, they form a giant cell and ingest nutrition. However, there has been no research on the phenomenon that occurs in the case where cyst nematodes enter the roots of non-host plants in the same manner.
[Patent Document 1] JP 1995(H07)-505118 A
[Patent Document 2] JP 1991(H03)-190807 A
[Patent Document 3] JP 1992(H04)-145010 A

### Disclosure of Invention

### [Problems to be Solved by the Invention]

The inventors of the present invention have studied the relationship between the hatching of potato cyst nematodes (PCNs) and the control method for a long time, and have noticed that a certain chemical agent is highly involved in the growth of non-host plants. The inventors have conducted extensive studies on the relationship between a hatching-accelerating substance for eggs (second-generation larvae) of PCNs and the growth of non-host plants, have found that the substance eventually contributes to an increased yield of agricultural produce, which is a non-host plant such as a sugar beet or an adzuki bean, and have completed the present invention that provides an easily available growth promoter using with safety for such a cultivated plant.

### [Means for Solving the Problems]

The present invention is specified by including the following configuration. That is, the present invention provides a plant growth promoter comprising a fatty acid dialkanolamide that produces a hatching-accelerating effect on eggs of potato cyst nematodes, wherein potato cyst nematodes hatched by the effect of the fatty acid dialkanolamide promote the growth of a non-host plant.

The fatty acid dialkanolamide is preferably a compound represented by the following general formula (1):

R-CO-N(-R'-OH)(-R"-OH) (1)

(in the general formula (1), R represents an alkyl group that has 1 to 20 carbon atoms and may be substituted, and R' and R" may be the same or different from each other and each represent an alkylene group that has 1 to 10 carbon atoms and may be substituted).
Furthermore, the fatty acid dialkanolamide is preferably a fatty acid diethanolamide and more preferably at least one selected from the group consisting of acetic acid diethanolamide, hexanoic acid diethanolamide, decanoic acid diethanolamide, octadecanoic acid diethanolamide, lauric acid diethanolamide, myristic acid diethanolamide, and coconut oil fatty acid diethanolamide.

The plant growth promoter is desirably sprayed on a soil where eggs of potato cyst nematodes are present.

### [Advantageous Effects of the Invention]

The present invention provides a sort of ecological agricultural chemical that ingeniously utilizes the specific ecology of potato cyst nematodes, the specific ecology being represented by a life cycle over a certain period of time (one year in Hokkaido). Since such an ecological agricultural chemical is stable and does not require the presence of synergists for generating activity unlike a naturally occurring hatching-accelerating substance for PCNs, the formulation of the chemical is quite easy.

According to the present invention, when a proper amount of the plant growth promoter of the present invention containing a fatty acid dialkanolamide is scattered or sprayed on the soil where potato cyst nematodes are present, the nematode density in the soil can be decreased because the plant growth promoter efficiently breaks the shell of eggs (second-generation larvae) of potato cyst nematodes in the soil within a short period of time and hatches the eggs, and then the nematodes are made to starve to death or killed by a method such as supply of an insecticide. When many non-host plants including agricultural produce are cultivated, the growth of the non-host plants is unexpectedly and surprisingly promoted despite the fact that potato cyst nematodes are not completely controlled, though the reason is unknown. Thus, enlarged agricultural produce or significantly grown agricultural produce can be harvested within a short period of time, whereby an increased yield can be achieved.

Furthermore, since the plant growth promoter *per se* is one type of generally used nonionic surfactant, there is few for possibility of contaminating soil, agricultural produce, and the environment. Therefore, it is believed that there is any few problem in terms of burden to the environment and safety to agricultural produce. With the plant growth promoter of the present invention, safer agricultural produce can be cultivated with high productivity and supplied as food in a sustainable manner.

In the case where crop rotation is unavoidably performed in the same farmland, a favorable crop rotation system (e.g., four-year crop rotation such as potato → wheat → eans → sugar beet) that provides a yield-increasing effect on agricultural produce cultivated after a solanaceous plant such as a potato can be established in the farmland by using the plant growth promoter of the present invention.

### [Brief Description of Drawings]

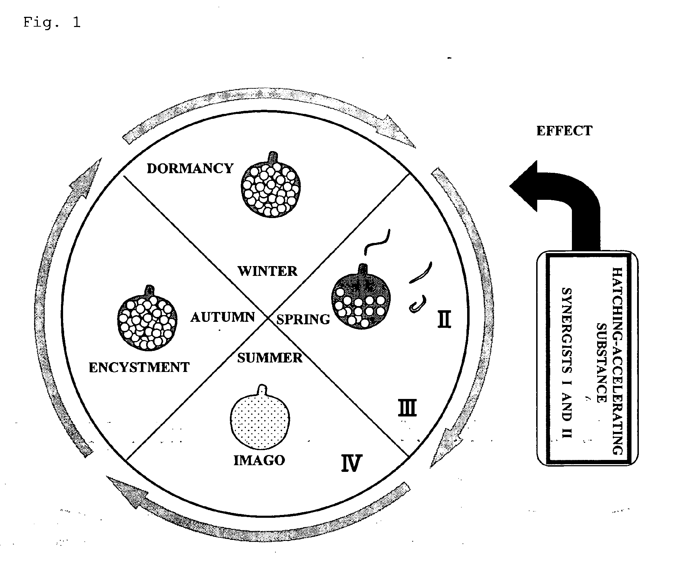

[Fig. 1] Fig. 1 schematically shows a life cycle of potato cyst nematodes. In Hokkaido, one cycle is substantially one year (winter → spring → summer → autumn). Synergists I and II are essential factors for the hatching of potato cyst nematodes and need to be present together with a naturally occurring hatching-accelerating substance.

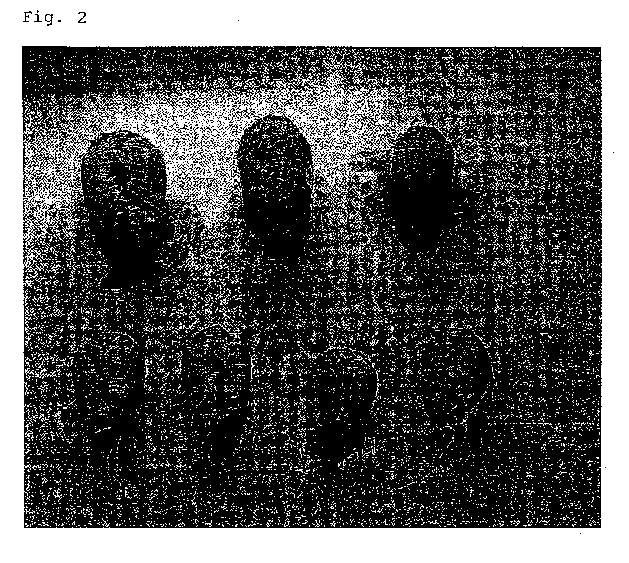

[Fig. 2] Fig. 2 is a photograph showing the enlargement of the roots of beets. Upper row: roots on which acetic acid diethanolamide were sprayed: 1.8 g sprayed (left), 5.5 g sprayed (center), and 9.0 g sprayed (right). Lower row: ordinary roots in an unprocessed area (where a chemical agent is not sprayed).

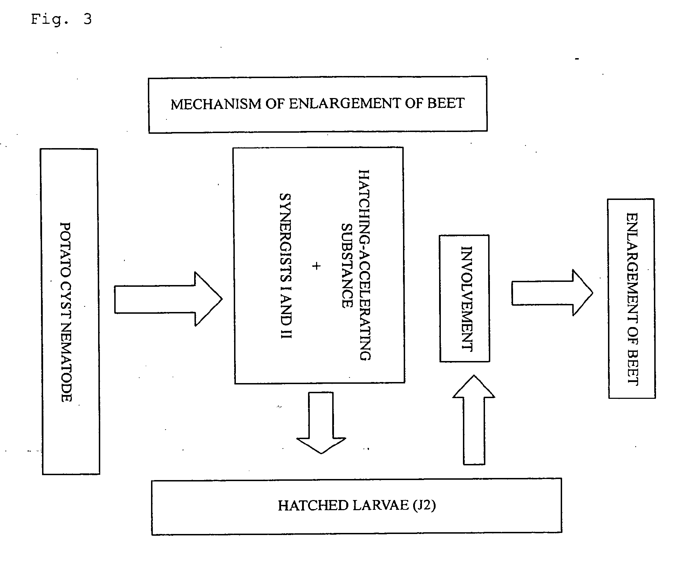

[Fig. 3] Fig. 3 is a hypothetical mechanism of the enlargement of a beet. As described in Fig. 1, the synergists I and II are factors required by the naturally occurring hatching-accelerating substance.

### [Best Mode for Carrying Out the Invention]

The plant growth promoter of the present invention is a plant growth promoter that promotes the growth of cultivated plants by the involvement of potato cyst nematodes. That is to say, the plant growth promoter of the present invention contains a fatty acid dialkanolamide that produces a hatching-accelerating effect on eggs of potato cyst nematodes, and potato cyst nematodes hatched by the effect of the fatty acid dialkanolamide are probably involved in promoting the growth of non-host plants.

In this specification, "a host plant" is essentially a plant with which potato cyst nematodes live parasitically, and is specifically a solanaceous plant because potato cyst nematodes have high host specificity to the solanaceous plant. Plants other than solanaceous plants are referred to as "non-host plants".

The phrase "producing a hatching-accelerating effect on eggs of potato cyst nematodes" mainly means that a plant growth promoter acts on the hatching of eggs (second-generation larvae) of potato cyst nematodes or acts so as to accelerate the hatching, but is not limited thereto. Although the detailed mechanism with which a fatty acid dialkanolamide acts on potato cyst nematodes as a hatching (-accelerating) substance so as to hatch the potato cyst nematodes is still unknown, the mechanism is assumed to be that described below. The second-generation larvae of potato cyst nematodes whose dormancy has been broken and that have been hatched by the effect of the fatty acid dialkanolamide promote the growth of non-host plants.

Potato cyst nematodes mainly inhabit the soil where a potato or the like is cultivated or a solanaceous plant (particularly a root of a host plant) such as a potato in a specific periodic life cycle shown in Fig. 1. In this specification, the term "potato cyst nematode" has the same meaning as the term "PCN", and mainly indicates a hatched larva and the grown imago but sometimes indicates any form that is not limited to a certain life cycle stage.

Specifically, it is certain that hatched potato cyst nematodes need to be present to produce a growth-promoting effect on target plants, and the nematodes that have been hatched by the effect of a fatty acid dialkanolamide promote the growth of the target plants. This is based on the fact that, when a fatty acid dialkanolamide was sprayed on a place where potato cyst nematodes were not present, the growth promotion of non-host plants did not occur. The mechanism with which potato cyst nematodes act is still unknown. The larvae of potato cyst nematodes enter non-host plants, mainly the roots of the non-host plants, and may secrete some type of growth-promoting substance or may secrete a substance that stimulates the plant growth hormone secretion of the non-host plants. The growth promotion of the non-host plants caused by hatched potato cyst nematodes can be seen as the enlargement or significant growth of the plants, an increase in the number of fruits born, or an increase in the sugar content of fruits.

### Fatty acid dialkanolamide

The fatty acid dialkanolamide contained in the plant growth promoter of the present invention is preferably a compound represented by the following general formula (1):

R-CO-N(-R'-OH)(-R"-OH) (1)

In the general formula (1), R represents an alkyl group that has 1 to 20 carbon atoms and may be substituted, and R' and R" may be the same or different from each other and each represent an alkylene group that has 1 to 15 carbon atoms, preferably 1 to 10 carbon atoms, and may be substituted.

The fatty acid dialkanolamide is a reaction product of a fatty acid and a dialkanolamine. The fatty acid may be a saturated or unsaturated fatty acid and also a straight or branched chain fatty acid. Furthermore, R, R', and R" may have a proper substituent that maintains or improve the effect of the plant growth promoter. Examples of the substituent include a hydroxyl group, an amino group, an alkoxy group, and an aryl group.

In the general formula (1), R preferably represents a straight or branched chain alkyl group having 1 to 20 carbon atoms and R' and R" each preferably represent a straight or branched chain alkylene group having 1 to 10 carbon atoms. Examples of R include a methyl group, a propyl group, a pentyl group, a heptyl group, a nonyl group, an undecanyl group, a tridecanyl group, and a heptadecanyl group. Examples of R' and R" include an ethylene group, a propylene group, an isopropylene group, and a butylene group.

For the fatty acid described above, a saturated fatty acid such as acetic acid (C₂), hexanoic acid (C₆, caproic acid), decanoic acid (C₁₀), lauric acid (C₁₂), myristic acid (C₁₄), or octadecanoic acid (C₁₈) is particularly preferred, and a mixture thereof may also be used. An example of the mixture is a coconut oil fatty acid including lauric acid (C₁₂) and myristic acid (C₁₄). Examples of the dialkanolamine include diethanolamine and diisopropanolamine.

Preferred examples of the fatty acid dialkanolamide include acetic acid diethanolamide, hexanoic acid diethanolamide, .decanoic acid diethanolamide, lauroyl diethanolamide, myristoyl diethanolamide, octadecanoic acid diethanolamide, and coconut oil fatty acid diethanolamide. Among these fatty acid dialkanolamides, hexanoic acid diethanolamide or coconut oil fatty acid diethanolamide is particularly preferred.

The accelerated hatching effect of an aqueous fatty acid dialkanolamide solution for the eggs of potato cyst nematodes was measured. The hatching ratios were 23.8% for 1000-fold diluted decanoic acid diethanolamide, 21.7% for 1000-fold diluted acetic acid diethanolamide, and 5.0% for water. It is believed that the fatty acid dialkanolamide has a function of breaking the eggshell of PCNs and thus the eggs of PCNs are forcedly hatched.

### • Plant growth promoter

The plant growth promoter according to the present invention needs an involvement of hatched potato cyst nematodes. That is, the plant growth promoter of the present invention is applicable to cultivated plants whose growth is desirably promoted, but the growth-promoting substance itself has not been completely clarified yet. For the growth-promoting effect, the experiment described below proves that hatched PCNs are involved in the generation or derivation of the growth-promoting substance that is produced into the target plants whose growth is to be promoted. The substance of the plant growth promoter contains at least the fatty acid dialkanolamide as an active component that promotes the hatching from eggs to larvae of PCNs. The fatty acid dialkanolamide may be contained as a single compound or as a mixture of different fatty acid dialkanolamides. The fatty acid dialkanolamide as a hatching-accelerating substance for PCNs is chemically stable unlike a hatching-accelerating substance secreted by host plants, and does not require the presence of accompanying synergists (I. II) unlike a natural hatching-accelerating substance. The effect of the fatty acid dialkanolamide is not influenced by a naturally occurring hatching-repressing substance for PCNs.

When the fatty acid dialkanolamide is used as an active substance contained in the plant growth promoter of the present invention, a fatty acid monoalkanolamide such as coconut oil fatty acid monoethanolamide, coconut oil fatty acid monoisopropanolamide, lauroyl monoethanolamide, or myristoyl monoethanolamide may be contained in a small amount. However, a satisfactory effect is not produced from only the fatty acid monoalkanolamide as described in Reference Examples below. In addition, another nonionic surfactant such as a polyoxyethylene higher alcohol ether or a polyethylene glycol fatty acid ester may be contained. When the plant growth promoter of the present invention is formulated, the fatty acid dialkanolamide may be used together with, in particular, the polyoxyethylene higher alcohol ether or the polyethylene glycol fatty acid ester. The content of the fatty acid dialkanolamide is preferably 5 to 10% by mass and the content of the polyoxyethylene higher alcohol ether or the polyethylene glycol fatty acid ester is preferably 0.1 to 1.0% by mass. In particular, hexanoic acid diethanolamide or coconut oil fatty acid diethanolamide is preferred as the fatty acid dialkanolamide. When such a fatty acid dialkanolamide is used together with polyethylene glycol, the plant growth-promoting effect becomes significantly high (Examples 10 to 13 described below).

Examples of the polyoxyethylene higher alcohol ether that may be used include polyoxyethylene octyl ether, polyoxyethylene lauryl ether, polyoxyethylene myristyl ether, polyoxyethylene stearyl ether, polyoxyethylene (2-ethylhexyl) ether, polyoxyethylene nonylphenyl ether, and polyoxyethylene octylphenyl ether.

Examples of the polyethylene glycol fatty acid ester include polyethylene glycol stearate and polyethylene glycol dioleate. In addition, polyethylene glycol ether ester may be used.

Preferably, the fatty acid dialkanolamide is used as an active substance contained in the plant growth promoter of the present invention, optionally together with another surfactant or an organic solvent such as alcohol, ketone, acid, or hydrocarbon; is changed into an aqueous solution, an emulsion, or a suspension to increase the adherence to the soil and plant; and is sprayed. Herein, the fatty acid dialkanolamide may be used together with an inorganic substance such as calcium carbonate, talc, or kaoline or a natural oil and fat such as castor oil, sunflower oil, soybean oil, or olive oil. The inorganic substance also functions as a carrier of the fatty acid dialkanolamide, and thus a sustainable effect of plant growth promotion is produced for a long time. Furthermore, if necessary, another hatching-accelerating substance (e.g., Solanoeclepin A), a bactericide, an insecticide, and an insect repellent may be suitably added to the plant growth promoter of the present invention.

In the present invention, a secretory substance-containing body of a solanaceous plant may be added. The secretory substance-containing body contains a substance secreted from the root of a solanaceous plant such as a potato, a tomato, or an eggplant. A secretory substance-containing body of a tomato is preferred. Since a tomato is cultivated by hydroponics in a large scale at present, the tomato hydroponic solution can be collected and used, if necessary, after concentration process. The concentration method is not particularly limited. For example, a hydroponic solution obtained when a tomato is cultivated by hydroponics may be passed through an ion-exchange resin layer, or such a hydroponic solution may be distilled. Instead of using such a secretory substance, a proper number of solanaceous plants such as a potato or a tomato may be cultivated among cultivated plants.

When the plant growth promoter of the present invention is sprayed on the soil where PCNs are present, the growth of cultivated plants such as agricultural produce, flowers, and grasses other than solanaceous plants is promoted in the soil. Any farmland after a solanaceous plant, preferably a potato, is cultivated and harvested is used as the soil where PCNs are present. Alternatively, a proper number of solanaceous plants such as a potato or a tomato may be cultivated between cultivated plants. In such a manner, the presence of PCNs is ensured, and thus the assumption that PCNs need to be involved in the growth promotion of non-host plants caused by the plant growth promoter is satisfied. The plant growth promoter may be applied as a control agent of PCNs for the cultivation of solanaceous plants such as a potato. By applying the plant growth promoter to the soil in the season when host plants are not cultivated, the eggs of PCNs are forcedly hatched and made to starve to dearth. Therefore, the damage of a potato caused by PCNs may be reduced. In this case, even if PCNs are not completely destroyed, the growth-promoting effect may be expected when a cultivated plant other than solanaceous plants is cultivated at the site where a potato has been cultivated. This is quite favorable in the case where a crop rotation system of crops including a potato is established in a farmland.

As described above, the plant growth promoter of the present invention is a plant growth trigger that accelerates the hatching of eggs of PCNs when applied to the soil where PCNs are present and allows the hatched PCNs to promotes the growth of non-host plants cultivated close to the PCNs.

The cultivated plants whose yield may be expected to be increased by applying the plant growth promoter of the present invention are not particularly limited. Such cultivated plants are commonly cultivated plants such as agricultural produce, flowers, and grasses. Examples of particularly preferable agricultural produce include a beet (sugar beet), a soybean, an adzuki bean, a corn, and oats.

When the plant growth promoter according to the present invention is actually sprayed on a farmland, a spraying solution is prepared so that the content of the fatty acid dialkanolamide is, for example, 0.001 to 1% by mass and preferably 0.01 to 0.5% by mass, and the spraying solution is sprayed one to several times during the cultivation of the plant, whereby the increased yield of agricultural produce may be achieved. For example, in Hokkaido, a spraying solution prepared so as to have a concentration of 0.01% by mass is sprayed once to several times from May to June, which is normally the right season for planting. Consequently, the growth-promoting effect on agricultural produce may be achieved.

When a chemical agent containing the fatty acid dialkanolamide is sprayed on the soil where PCNs are present, the growth of plants such as agricultural produce, flowers, and grasses cultivated in the soil is promoted. The chemical agent may be applied to agricultural produce such as a sugar beet, an adzuki bean, or a soybean. For example, a sugar beet is enlarged without decreasing the sugar content, and an adzuki bean and a soybean become taller and have a larger pod with a larger number of seeds. In these cases, the growth promotion leads to an increase in the yield of agricultural produce. In particular, in the soil where the eggs of PCNs are present, the yield of solanaceous plants is decreased due to the damage caused by hatched nematodes, but when the chemical agent containing the fatty acid dialkanolamide is sprayed on the soil practically, the yield of non-host plants is definitely increased. Although the reason is unclear, it is thought that the chemical agent containing the fatty acid dialkanolamide forcedly destroys the cyst and the shell of eggs to allow the eggs to hatch, and the hatched nematodes probably enter a non-host plant and secrete a substance that acts like a growth hormone (or a substance that facilitates the secretion of a plant growth hormone), whereby the enlargement due to growth promotion occurs (refer to Fig. 3).

In other words, the present invention includes, as an aspect, a plant growth-promoting method in which a plant growth promoter containing the fatty acid dialkanolamide represented by the above-described general formula (1) is sprayed on the soil where a non-host plant is cultivated and the eggs of potato cyst nematodes are present, and the potato cyst nematodes hatched by the effect of the fatty acid dialkanolamide promote the growth of the non-host plant; and a method for using the fatty acid dialkanolamide in such a plant growth-promoting method. Herein, the amount of the fatty acid dialkanolamide contained, the method and season for spraying the plant growth promoter, and the amount of the plant growth promoter sprayed have been described above.

### [Examples]

The present invention will now be described in detail based on Examples and Reference Examples, but is not limited to Examples. The names of apparatuses used, the materials used and the numerical conditions of the materials such as the concentration, the amount used, and the processing time, and the processing methods employed in Examples below are merely preferred examples within the scope of the present invention.

### [Examples 1 to 3]

A farmland (Fujimi, Kutchan-cho, Hokkaido) contaminated by PCNs was examined in advance. The PCN density was 2000 to 5000 per 20 g of air-dried soil.

In that farmland, about 7 beets per 1 m² were cultivated under the conditions that the width of a ridge was 69 cm and the distance between beets was 30 cm. After beginning of the cultivation, when the beets grew to a height of 15 cm and a true leaf opened up, an aqueous solution of acetic acid diethanolamide was sprayed around the roots only once (May 30, 2007). The amount sprayed was changed to three levels, 1.8, 5.5, and 9.0 (g/m²), and each chemical agent having the above-described amount was dissolved in 5 liters of water to obtain a spraying solution. Subsequently, the beets were cultivated for 112 days and the grown beets were harvested. The weight (kg) of the largest beet, the average weight (kg) of three beets other than the largest beet, and the sugar content (%) were measured. Table 1 shows the results. The sugar content (%) was measured with a saccharimeter (MASTER-M model 2313 available from ATAGO Co., Ltd.).

The results for beets cultivated in the same manner in an unprocessed area where the chemical agent was not sprayed are shown in Table as Reference Example 1. In this case, an average weight of four beets of the harvested beets was employed.

[Table 1]

**Table 1**

| | Sprayed amount (g/m²) | Average weight of three beets other than the largest beet (kg) | Weight of the largest beet (kg) | Sugar content (%) |
|---|---|---|---|---|
| Example 1 | 9.0 | 1.40 | 1.90 | 19.90 |
| Example 2 | 5.5 | 1.68 | 2.53 | 20.10 |
| Example 3 | 1.8 | 1.63 | 2.85 | 19.80 |
| Reference Example 1 | - | 1.35 | | 21.1 |

The same chemical agent as that used in Examples 1 to 3 was sprayed on the soil where PCNs were not present, and beets were cultivated in the same manner as in Examples 1 to 3. The results obtained in the soil where PCN-s were not present were the same as that obtained in the case where beets were cultivated in the unprocessed area (Reference Example 1). The beets were not enlarged.

### [Examples 4 to 6]

The same experiments as in Examples 1 to 3 were conducted, except that decanoic acid diethanolamide was used as the chemical agent. Table 2 shows the results.

[Table 2]

**Table 2**

| | Sprayed amount (g/m²) | Average weight of three beets other than the largest beet (kg) | Weight of the largest beet (kg) | Sugar content (%) |
|---|---|---|---|---|
| Example 4 | 9.0 | 1.62 | 2.15 | 23.40 |
| Example 5 | 5.5 | 1.92 | 2.35 | 20.00 |
| Example 6 | 1.8 | 1.86 | 2.20 | 21.20 |

### [Examples 7 to 9]

The same experiments as in Examples 1 to 3 were conducted, except that octadecanoic acid diethanolamide was used as the chemical agent. Table 3 shows the results.

[Table 3]

**Table 3**

| | Sprayed amount (g/m²) | Average weight of three beets other than the largest beet (kg) | Weight of the largest beet (kg) | Sugar content (%) |
|---|---|---|---|---|
| Example 7 | 9.0 | 1.85 | 2.30 | 21.00 |
| Example 8 | 5.5 | 1.65 | 1.95 | 20.20 |
| Example 9 | 1.8 | 1.48 | 2.05 | 20.20 |

### [Examples 10 to 13]

The same experiments as in Examples 1 to 3 were conducted, except that a mixed chemical agent containing coconut oil fatty acid diethanolamide and polyethylene glycol was used. The mixed chemical agent contained 6% by mass of coconut oil fatty acid diethanolamide and 0.6% by mass of polyethylene glycol. Table 4 shows the results, in which the sprayed amounts are each a value of coconut oil fatty acid diethanolamide obtained through conversion.

[Table 4]

**Table 4**

| | Sprayed amount (g/m²) | Average weight of three beets other than the largest beet (kg) | Weight of the largest beet (kg) | Sugar content (%) |
|---|---|---|---|---|
| Example 10 | 1.80 | 2.27 | 2.70 | 19.30 |
| Example 11 | 1.08 | 2.13 | 2.35 | 19.80 |
| Example 12 | 0.33 | 1.85 | 2.60 | 20.00 |
| Example 13 | 0.11 | 1.77 | 2.35 | 18.00 |

### [Reference Examples 2 to 5]

The same experiments as in Examples 1 to 3 were conducted, except that 18 liters of potato root leachate or tomato root leachate was sprayed, the potato or tomato being cultivated in a hothouse, instead of the spraying of the chemical agent. Table 5 shows the results.

Furthermore, the same experiments as in Examples 1 to 3 were conducted, except that tomato seedlings (height: about 30 cm) or potatoes cultivated in a hothouse were planted in spaces between the beets and the tomatoes or potatoes that died down were removed about four weeks later, instead of the spraying of the chemical agent. Table 5 also shows the results.

[Table 5]

**Table 5**

| | | Average weight of three beets other than the largest beet (kg) | Weight of the largest beet (kg) | Sugar content (%) |
|---|---|---|---|---|
| Reference Example 2 | Spraying of potato root leachate | 1.37 | 1.55 | 22.10 |
| Reference Example 3 | Spraying of tomato root leachate | 1.27 | 1.65 | 21.00 |
| Reference Example 4 | Planting of tomato seedlings | 1.67 | 2.65 | 20.20 |
| Reference Example 5 | Planting of potato seedlings | 1.62 | 2.10 | 20.60 |

As is clear from the results shown in Table 5, a secretory substance from a potato or a tomato, which is a host plant of PCNs, is needed to allow a beet to grow to a large size, but the relationship between PCNs and the enlargement of a beet is still unknown. However, it can be understood from Tables 1 to 5 that the growth promoter according to the present invention produces an effect equal to or more than that of the secretory substance from a potato or a tomato.

### [Reference Examples 6 to 11]

In a farmland (Fujimi, Kutchan-cho, Hokkaido) where a potato had been cultivated and PCNs had appeared, an attempt to control PCNs at a site where a potato had been cultivated was carried out by spraying the same chemical agents as those used in Examples 1 to 13, and the potato root leachate and the tomato root leachate to the farmland under the conditions below.

After the chemical agents were sprayed, all the cysts in 20 g of air-dried soil were gathered and the total number of eggs and second-generation larvae in the cysts was obtained. Table 6 shows the total number as nematode density. In this soil, as described in Examples 1 to 3, there were 2000 to 5000 PCNs per 20 g of air-dried soil. Therefore, it is apparent from the results shown in Table 6 that some of the PCNs were hatched, though the data has a variation.

[Table 6]

**Table 6**

| | Type of hatching-accelerating substance | Sprayed amount | Nematode density (/20 g of air-dried soil) |
|---|---|---|---|
| Reference Example 6 | acetic acid diethanolamide | 9.0 g/m² | 846 |
| Reference Example 7 | decanoic acid diethanolamide | 9.0 g/m² | 765 |
| Reference Example 8 | octadecanoic acid diethanolamide | 9.0 g/m² | 540 |
| Reference Example 9 | coconut oil fatty acid diethanolamide | 9.0 g/m² | 1215 |
| Reference Example 10 | potato root leachate | 18 L | 806 |
| Reference Example 11 | tomato root leachate | 18 L | 1069 |

### [Examples 14 to 16 and Reference Examples 12 to 14]

Beets were cultivated in the same manner as in Example 1 after various treatments were performed on the farmland (Fujimi, Kutchan-cho, Hokkaido) where the PCN density was 2000 to 4000 per 20 g of air-dried soil.

[Table 7]

**Table 7**

| Name of sections | Treatments performed | PCN density (/20 g of air-dried soil) |
|---|---|---|
| 1-1 | After fermented cow dung was applied as a fertilizer, beet was planted. | 3100 |
| 2-1 | After 260 mg of hexanoic acid diethanolamide was dissolved in 100 ml of water and the solution was sprayed around the area where a single beet was to be planted, beet was planted. | 600 |
| 2-2 | After 260 mg of coconut oil fatty acid diethanolamide was dissolved in 100 ml of water and the solution was sprayed around the area where a single beet was to be planted, beet was planted. | |
| 2-3 | After 4.3 g of the mixed chemical agent used in Examples 10 to 13 was dissolved in 100 ml of water and the solution was sprayed around the area where a single beet was to be planted, beet was planted. | |
| 2-4 | After 260 mg of acetic acid monoethanolamide was dissolved in 100 ml of water and the solution was sprayed around the area where two beets were to be planted, beet was planted. | |
| 2-5 | After 260 mg of decanoic acid monoethanolamide was dissolved in 100 ml of water and the solution was sprayed around the area where two beets were to be planted, beet was planted. | |

The beets were cultivated under the conditions that the width of a ridge was 69 cm and the distance between beets was 30 cm. First, the chemical agents were sprayed (the chemical agents were dissolved in water and sprayed on the soil around the roots of beets) once and beet seedlings were planted on May 16, 2008. Then the beets were cultivated until October 8, 2008 and harvested. After the stems and leaves of the harvested beets were removed, the weight of the beets was measured.

[Table 8]

**Table 8**

| | Name of sections | Average weight (kg) | Weight of the largest beet (kg) | Sugar content (%) |
|---|---|---|---|---|
| Example 14 | 1-1 | 3.50 | 3.50 | 18.0 |
| Example 15 | 2-1 | 1.55 | 2.10 | |
| Example 16 | 2-2 | 1.95 | 2.60 | |
| Reference Example 12 | 2-3 | 1.05 | 1.05 | |
| Reference Example 13 | 2-4 | 1.40 | 1.40 | |
| Reference Example 14 | 2-5 | 1.10 | 1.80 | |

By comparing the PCN density in section 2-1 and section 1-1 shown in Table 7, it was found that the spraying of hexanoic acid diethanolamide decreases PCN density and contributes to PCN control. It was also found from the results of beet cultivation shown in Table 8 that the spraying of a fatty acid diethanolamide such as hexanoic acid diethanolamide achieves the enlargement of a beet, and acetic acid monoethanolamide and decanoic acid monoethanolamide produce a poor effect of growth promotion.

## Claims

1. A plant growth promoter comprising a fatty acid dialkanolamide that produces a hatching-accelerating effect on eggs of potato cyst nematodes, wherein potato cyst nematodes hatched by the effect of the fatty acid dialkanolamide promote the growth of a non-host plant.

2. The plant growth promoter according to Claim 1, wherein the fatty acid dialkanolamide is represented by the following general formula (1):
R-CO-N(-R'-OH)(-R"-OH) (1)
(in the general formula (1), R represents an alkyl group that has 1 to 20 carbon atoms and may be substituted, and R' and R" may be the same or different from each other and each represent an alkylene group that has 1 to 10 carbon atoms and may be substituted).

3. The plant growth promoter according to Claim 1 or 2, wherein the fatty acid dialkanolamide is a fatty acid diethanolamide.

4. The plant growth promoter according to any one of Claims 1 to 3, wherein the fatty acid dialkanolamide is at least one selected from the group consisting of acetic acid diethanolamide, hexanoic acid diethanolamide, decanoic acid diethanolamide, octadecanoic acid-diethanolamide, lauric acid diethanolamide, myristic acid diethanolamide and coconut oil fatty acid diethanolamide.

5. The plant growth promoter according to any one of Claims 1 to 4, the plant growth promoter being sprayed on a soil where eggs of potato cyst nematodes are present.
